# FASCICULE DE BREVET EUROPEEN

(11) **EP 0 774 373 B1**
(45) Date de publication et mention de la délivrance du brevet: **06.12.2000**
(21) Numéro de dépôt: 96116428.2
(22) Date de dépôt: 14.10.1996
(51) Int. Cl.: B60K 15/04

(54) **Dispositif perfectionné de remplissage d'un réservoir de carburant de véhicule automobile**
Vorrichtung zum Betanken des Kraftstoffbehälters eines Kraftfahrzeuges
Arrangement for filling a motor vehicle fuel tank

(30) Priorité: 08.11.1995 FR 9513305
(43) Date de publication de la demande: 21.05.1997
(73) Titulaire: Compagnie de Matériel et d'Equipements Techniques C.O.M.E.T., 60300 Senlis (FR)
(72) Inventeur: Galland, Didier, 60590 Eragny sur Epte (FR); Crepin, Christophe, 92400 Courbevoie (FR)
(74) Mandataire: Rinuy, Santarelli

(56) Documents cités:
- DE-A- 4 109 337
- FR-A- 2 710 721
- US-A- 5 159 953

## Description

L'invention concerne un dispositif de remplissage de réservoir de carburant de véhicule automobile.

L'invention concerne plus particulièrement un dispositif de remplissage pour réservoir de carburant de véhicule automobile, du type comportant une tête de remplissage dont un conduit tubulaire est destiné à recevoir un pistolet de distribution de carburant et est prolongé longitudinalement vers le bas par un tube de remplissage débouchant dans le réservoir.

Au cours du remplissage du réservoir de carburant d'un véhicule automobile, des vapeurs chargées en hydrocarbures sont susceptibles de s'échapper dans l'atmosphère et sont donc une source potentielle de pollution. Dans le but d'éviter ce phénomène, les pistolets de distribution sont munis d'un dispositif d'aspiration des vapeurs refoulées vers l'atmosphère, que ce soient des vapeurs initialement contenues à l'intérieur du réservoir et qui sont refoulées par l'arrivée du carburant liquide ou que ce soient des vapeurs générées pendant le ravitaillement.

Toutefois, le dispositif d'aspiration des pistolets de distribution ne fonctionne que lorsque le pistolet distribue effectivement du carburant, c'est-à-dire uniquement en présence d'un débit de carburant.

Or, entre le moment où l'on ôte le bouchon d'obturation du dispositif de remplissage du véhicule et le moment où commence effectivement la distribution, il peut s'écouler un laps de temps relativement important qui correspond par exemple au temps qu'il faut pour décrocher le pistolet de son support et pour l'introduire à l'intérieur de la tête de remplissage.

De plus, il est fréquent que l'automobiliste soit obligé d'attendre la remise à zéro du compteur de la pompe de distribution, ce qui ne peut intervenir qu'après qu'après le paiement de l'automobiliste précédent, ce qui peut nécessiter plusieurs minutes.

Or, pendant ce temps, le réservoir est à l'air libre et les vapeurs chargées d'hydrocarbures qui étaient contenues dans le réservoir sont libres de se disperser dans l'atmosphère.

Le document US 5 159 953 A propose un dispositif de remplissage du type précité, dans lequel un clapet normalement fermé est interposé dans le dispositif de remplissage, et dont l'ouverture est commandée par l'action d'un débit de carburant sur une paroi d'obturation du clapet, lors du remplissage du réservoir, le clapet étant monté articulé, autour d'un axe transversal sensiblement tangentiel au conduit tubulaire de la tête de remplissage, entre une position fermée sensiblement transversale au conduit et une position ouverte escamotée vers le bas.

L'invention a pour but de proposer un dispositif de remplissage permettant de limiter au mieux les dispersions dans l'atmosphère de vapeurs saturées en hydrocarbure, au cours du remplissage du réservoir.

Dans ce but, l'invention propose un dispositif de remplissage pour un réservoir de carburant de véhicule automobile, du type comportant une tête de remplissage dont un conduit tubulaire est destiné à recevoir un pistolet de distribution de carburant et est prolongé longitudinalement vers le bas par un tube de remplissage débouchant dans le réservoir, un clapet normalement fermé étant interposé dans le dispositif de remplissage, et dont l'ouverture est commandée par l'action d'un débit de carburant sur une paroi d'obturation du clapet, lors du remplissage du réservoir, le clapet étant monté articulé, autour d'un axe transversal sensiblement tangentiel au conduit tubulaire de la tête de remplissage, entre une position fermée sensiblement transversale au conduit et une position ouverte escamotée vers le bas, caractérisé en ce qu'il est prévu un dispositif de verrouillage du clapet en position fermée et en ce que le déverrouillage du clapet est commandé lors de l'introduction du pistolet dans la tête de remplissage.

Selon d'autres caractéristiques de l'invention :
- le clapet est rappelé vers sa position fermée par des moyens de rappel élastique ;
- le clapet est rappelé vers sa position fermée par un contrepoids fixé sur le clapet ;
- le contrepoids est réalisé venu de matière avec le clapet ;
- la paroi latérale du conduit tubulaire comporte un évidement agencé au niveau de l'axe
- le contrepoids est réalisé venu de matière avec le clapet ;
- la paroi latérale du conduit tubulaire comporte un évidement agencé au niveau de l'axe d'articulation du clapet et, en position ouverte du clapet, le contrepoids est reçu dans l'évidement pour permettre au clapet de s'escamoter complètement ;
- le dispositif de verrouillage comporte un levier articulé, autour d'un axe transversal par rapport à la tête de remplissage, entre une position de déverrouillage et une position de verrouillage vers laquelle il est rappelé élastiquement et dans laquelle un doigt transversal, agencé à l'extrémité libre du levier coopère avec une surface de butée du clapet pour verrouiller ce dernier en position fermée ;
- le levier comporte un tronçon de commande sur lequel agit le pistolet lors de son introduction dans la tête de remplissage pour déplacer le levier de sa position de verrouillage vers sa position de déverrouillage dans laquelle le tronçon de commande est escamoté vers le bas ;
- le levier est articulé par une première extrémité autour d'un axe parallèle à l'axe d'articulation du clapet et agencé au-dessus de celui-ci, le tronçon de commande est formé sensiblement à mi-longueur du levier, et l'extrémité libre du levier porte le doigt transversal qui est destiné à coopérer avec la surface de butée agencée au-dessus et en regard de la paroi d'obturation du clapet ;
- la paroi d'obturation comporte une cuvette destinée à permettre le passage du doigt transversal du levier lorsque celui-ci passe de sa position de verrouillage à sa position escamotée de déverrouillage sans provoquer l'ouverture du clapet ;
- la surface de butée s'étend au-dessus de la cuvette du clapet en regard de la trajectoire de l'extrémité du levier par rapport au clapet, de sorte qu'en retournant vers sa position de verrouillage, le levier force, le cas échéant, le clapet vers sa position fermée, le doigt transversal du levier glissant le long de la surface de butée du clapet ;
- la tête de remplissage comporte un dispositif de détrompage qui est agencé au-dessus du clapet et du tronçon de commande du levier de verrouillage de manière à empêcher qu'un pistolet non conforme au dispositif de détrompage ne puisse provoquer l'ouverture du clapet ;
- le dispositif comporte un tube anti-refoulement dont une extrémité inférieure débouche dans le réservoir et dont une extrémité supérieure débouche dans la tête de remplissage en dessous du clapet.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique d'un réservoir de carburant de véhicule automobile muni d'un dispositif de remplissage conforme aux enseignements de la présente invention ;
- la figure 2 est une vue partielle en perspective avec arrachement du clapet d'un tel dispositif de remplissage muni de ses moyens de verrouillage ;
- la figure 3 est une vue en coupe transversale selon le plan 3-3 de la figure 2 ;
- les figures 4, 5 et 6 sont des vues en coupe plus détaillées d'un tel dispositif représenté, respectivement, lorsque le clapet est fermé et verrouillé, fermé et déverrouillé, ouvert.

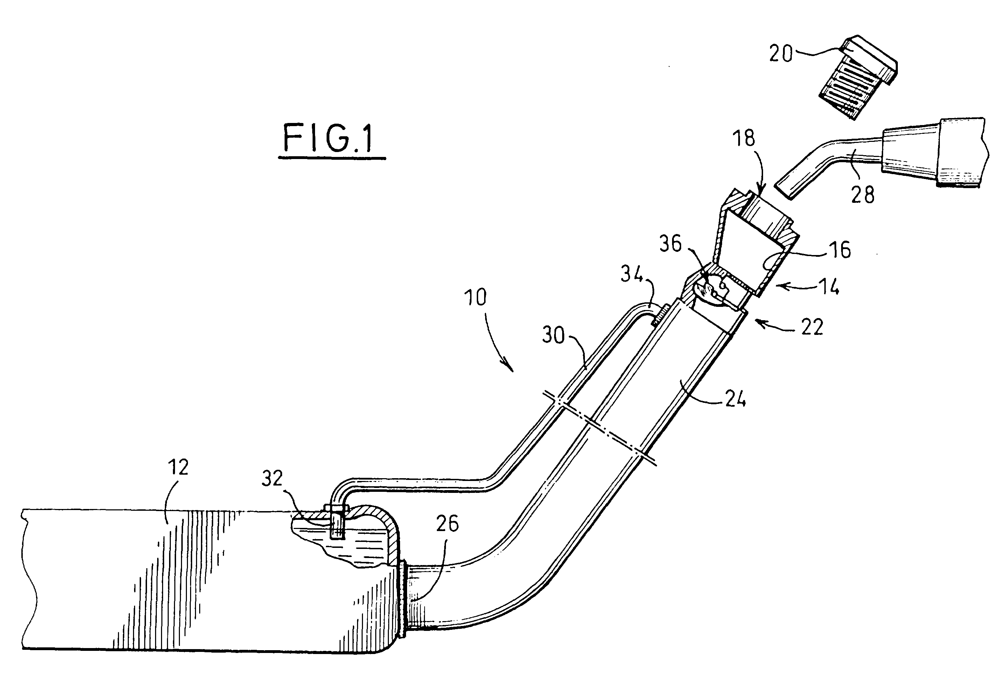

On a représenté sur la figure 1 un dispositif 10 de remplissage d'un réservoir 12 de carburant de véhicule automobile qui comporte essentiellement une tête de remplissage 14 dans laquelle un conduit tubulaire 16 est destiné à être obturé à son extrémité supérieure ouverte 18 par un bouchon amovible 20 et qui est prolongé longitudinalement vers le bas à son extrémité inférieure 22 par un tube de remplissage 24 dont l'extrémité inférieure 26 débouche dans le réservoir 12.

Un pistolet 28 de distribution de carburant est destiné à être introduit dans la tête de remplissage 14, une fois le bouchon 20 enlevé, pour remplir le réservoir 12 de carburant.

Au cours du remplissage du réservoir 12, les vapeurs, chargées d'hydrocarbures, initialement contenues dans le réservoir 12 sont évacuées en direction de la tête de remplissage 14 par un tube anti-refoulement 30 dont une extrémité inférieure 32 débouche dans le réservoir 12 et dont une extrémité supérieure 34 débouche dans la tête de remplissage 14.

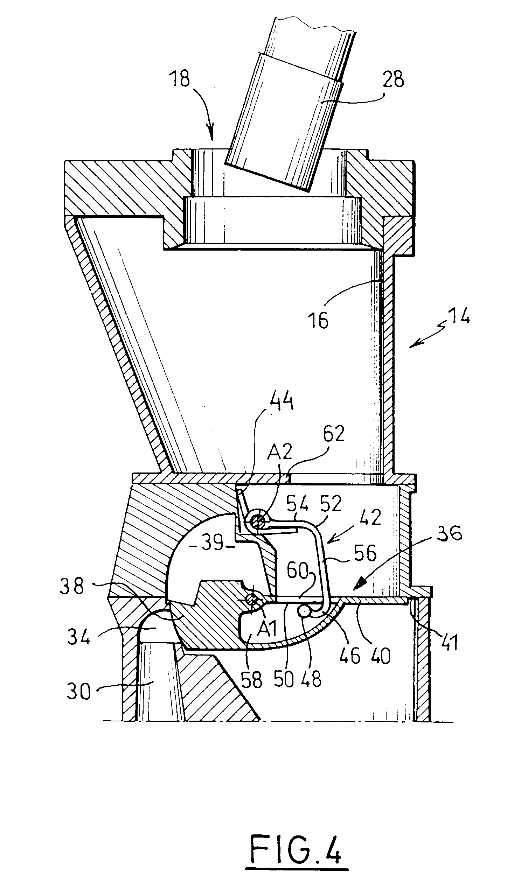

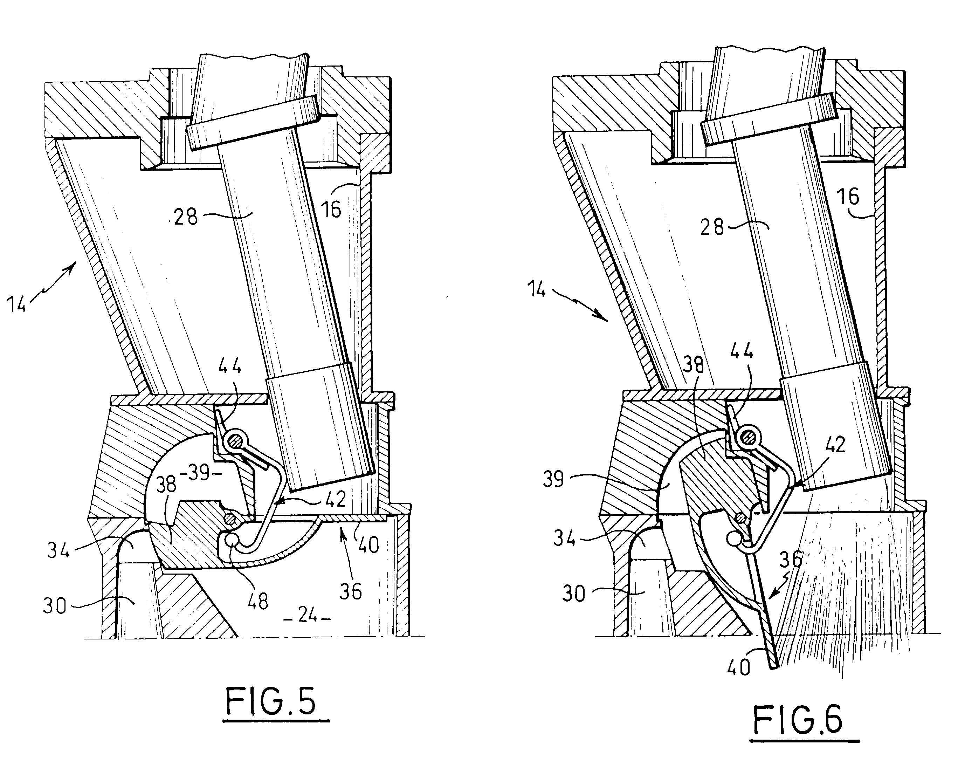

Comme on le voit plus particulièrement sur les figures 4 à 6, le dispositif de remplissage 10 comporte un clapet d'obturation 36 qui est monté pivotant, autour d'un axe transversal A1, dans la tête de remplissage 14, entre une position fermée représentée sur la figure 4 et une position ouverte représentée sur la figure 6.

En dehors du temps de remplissage du réservoir 12, le clapet 36 est en position fermée, position vers laquelle il est rappelé par un contrepoids 38 agencé du côté opposé à une paroi transversale d'obturation 40 du clapet 36 par rapport à l'axe d'articulation A1.

Le contrepoids 38 est réalisé venu de matière avec le clapet 36 et est reçu dans un évidement 39 agencé dans le conduit tubulaire 16 de la tête de remplissage 14.

A titre de variante, on peut prévoir des moyens élastiques de rappel du clapet 36 vers sa position fermée, en lieu et place du contrepoids 38.

En position fermée du clapet 36, la paroi transversale d'obturation 40 est en appui sur un siège 41 formé dans la tête de remplissage 14 de manière à obturer le conduit tubulaire 16 et éviter ainsi que des vapeurs de carburant, saturées en hydrocarbures, ne s'échappent dans l'atmosphère lorsque le bouchon 20 est ôté de l'extrémité supérieure 18 de la tête de remplissage 14.

Un levier de verrouillage 42 du clapet 36 est prévu pour interdire l'ouverture du clapet 36 en l'absence d'un pistolet 28 de distribution.

Le levier de verrouillage 42 est susceptible de pivoter autour d'un axe transversal A2, sensiblement parallèle à l'axe A1 d'articulation du clapet, et agencé au-dessus de celui-ci.

Le levier 42 est susceptible de pivoter depuis une position de verrouillage du clapet 36 vers une position de déverrouillage dans laquelle il est escamoté vers le bas du fait de l'introduction d'un pistolet de distribution 28 ainsi qu'on peut le voir à la figure 5.

Le levier 42 est ramené vers sa position de verrouillage par un ressort 44, et, dans cette position, l'extrémité libre 46 du bras 42, qui porte un doigt transversal 48, coopère avec une surface de butée 50 du clapet 36 qui est agencée au-dessus de la paroi transversale d'obturation 40 et en regard de celle-ci.

En position de verrouillage du levier 42, le doigt 50 retient ainsi le clapet 36 par une portion sensiblement centrale.

Selon une caractéristique de l'invention, le passage du levier 42 de sa position de verrouillage à sa position de déverrouillage est commandé par l'introduction d'un pistolet 28 qui prend appui contre un tronçon de commande 52 du levier 42.

Afin que le tronçon de commande 52 soit accessible par le pistolet, celui-ci est agencé sensiblement au centre du levier 42 et se trouve, en position de verrouillage, sensiblement au milieu du conduit tubulaire 16 de la tête de remplissage 14. Le levier 42 est donc coudé et possède une première partie 54 qui est comprise entre l'axe d'articulation A2 du levier 42 et le tronçon de commande 52 et qui est disposée sensiblement transversalement dans le conduit 16 lorsque le levier 42 est en position de verrouillage, et une seconde partie 56, qui est comprise entre le tronçon de commande 52 et l'extrémité libre 46 portant le doigt transversal 48 qui s'étend sensiblement longitudinalement dans le conduit tubulaire, au-dessus du clapet 36.

Conformément à une autre caractéristique de l'invention, il est prévu que le passage du levier 42 de sa position de verrouillage à sa position de déverrouillage se fasse sans provoquer l'ouverture du clapet 36.

A cet effet, la paroi d'obturation 40 du clapet 36 comporte une cuvette 58 dont la forme correspond sensiblement au volume balayé par l'extrémité libre inférieure 46 du levier 42 ainsi que par le doigt transversal 48 lorsque le levier passe de sa position de verrouillage à sa position de déverrouillage.

De la sorte, après l'introduction du pistolet 28 dans la tête de remplissage 14, le levier 42 est en position de déverrouillage mais le clapet 36 reste en position fermée, comme cela est représenté sur la figure 5.

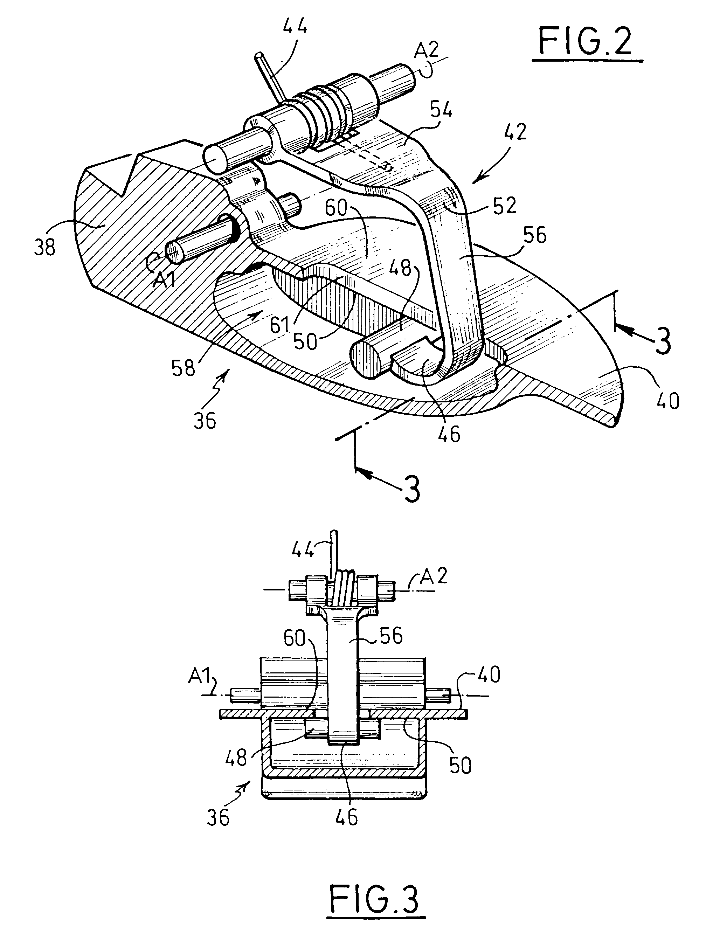

Comme on peut le voir sur la figure 2, la cuvette 58 est partiellement obturée par un voile supérieur 60 dont la face inférieure, tournée en direction de la paroi d'obturation 40, constitue la surface de butée 50, et qui comporte une lumière 61 pour le passage de la partie 56 du levier 42.

Lors de la distribution du carburant par le pistolet 28, la pression du débit de carburant sur la paroi d'obturation 40 force le clapet 36 vers sa position ouverte de manière à permettre le remplissage du réservoir 12.

Pendant tout le temps de la distribution de carburant, les vapeurs issues du réservoir 12 sont absorbées par le dispositif (non représenté) d'aspiration des vapeurs du pistolet 28.

Ainsi que cela est représenté sur les figures 4 à 6, l'extrémité supérieure 34 du tube anti-refoulement 30, par lequel remontent les vapeurs du réservoir 12, débouche dans la tête de remplissage 14, en dessous du clapet 36, afin que ces vapeurs ne puissent s'échapper que lorsque le clapet 36 est en position ouverte, ce qui coïncide avec la période de fonctionnement du dispositif d'aspiration du pistolet 28.

De plus, dans l'exemple de réalisation de l'invention représenté sur les figures, l'extrémité supérieure 34 du tube anti-refoulement débouche dans l'évidement 39 de la tête de remplissage 14 et elle est obstruée par le contrepoids 38 lorsque le clapet 36 est en position fermée.

Dès la fin de la distribution de carburant, et sans attendre que le pistolet 28 soit retiré de la tête de remplissage 14, le clapet 36 se referme sous l'effet de son contrepoids 38 ou de moyens élastiques de rappel.

Ainsi, dès l'arrêt de la distribution, les vapeurs issues du réservoir ne peuvent s'échapper vers l'atmosphère.

Lorsque le pistolet 28 est retiré de la tête de remplissage 14, le levier 42 retourne vers sa position de verrouillage représentée à la figure 4.

Le clapet 36 devant être ouvert par la seule pression du débit de carburant, le tarage du contrepoids 38 doit être réalisé finement et ne peut de la sorte exercer qu'une force de rappel assez faible.

Le levier de verrouillage 42 peut, quant à lui, être muni d'un ressort 54 exerçant une forte force de rappel de manière à empêcher tout ballottement du clapet 36 lorsque le véhicule est en mouvement.

Selon une des caractéristiques de l'invention, le voile supérieur 60 qui obture partiellement la cuvette 58 s'étend sur toute la longueur transversale de celle-ci, en regard et au-dessus du déplacement relatif du doigt transversal 52 par rapport au clapet 36 de sorte que l'extrémité 46 du levier 42 ne puisse s'échapper de la cuvette 58.

Cette disposition présente entre autres l'avantage que si, pour une raison quelconque, les moyens de rappel du clapet 36 ne suffisent pas à provoquer sa fermeture à la fin de la distribution de carburant, lorsque l'on retire le pistolet 28 de la tête de remplissage, le retour du levier 42 vers sa position de verrouillage entraîne avec lui le retour du clapet 36 vers sa position fermée par coopération du doigt transversal 48 du levier 42 avec la surface de butée 50 formée sous le voile supérieur 60.

D'ailleurs, la position de verrouillage du levier 42 est déterminée par l'arrivée en butée de la paroi d'obturation 40 du clapet 36 contre son siège 41.

Dans le cas où le dispositif de remplissage selon l'invention est monté sur un véhicule fonctionnant à l'essence sans plomb, un détrompeur 62 est interposé dans le conduit tubulaire 16 de la tête de remplissage 14, au-dessus du clapet 36 et de son levier de verrouillage 42.

Le détrompeur 62 comporte un diamètre de passage réduit qui n'autorise le passage du pistolet 28 que si celui-ci est d'un diamètre inférieur au diamètre normalisé indiquant que le pistolet 28 distribue de l'essence sans plomb.

De la sorte, si le pistolet 28 introduit dans la tête de remplissage 14 est d'un diamètre supérieur au diamètre normalisé du détrompeur 62, le pistolet 28 arrive en butée contre le détrompeur 62 et de la sorte ne peut provoquer le déverrouillage du clapet 36.

Si l'automobiliste déclenche la distribution de carburant, le carburant s'accumule au-dessus du clapet 36 et provoque très rapidement le déclenchement du dispositif d'arrêt automatique du pistolet 28.

Dans un dispositif de distribution de carburant selon l'état de la technique, le détrompeur 62 doit donc être associé à un obturateur articulé agencé en dessous du diamètre normalisé du détrompeur et qui ne peut donc être ouvert que par un pistolet au diamètre adéquat.

Le dispositif de remplissage selon l'invention permet donc de se dispenser d'un tel obturateur.

## Revendications

1. Dispositif de remplissage pour un réservoir (12) de carburant de véhicule automobile, du type comportant une tête de remplissage (14) dont un conduit tubulaire (16) est destiné à recevoir un pistolet (28) de distribution de carburant et est prolongé longitudinalement vers le bas par un tube de remplissage (24) débouchant dans le réservoir (12), un clapet (36) normalement fermé étant interposé dans le dispositif de remplissage (10), et dont l'ouverture est commandée par l'action d'un débit de carburant sur une paroi d'obturation (40) du clapet (36), lors du remplissage du réservoir (12), le clapet (36) étant monté articulé, autour d'un axe transversal (A1) sensiblement tangentiel au conduit tubulaire (16) de la tête de remplissage (14), entre une position fermée sensiblement transversale au conduit (16) et une position ouverte escamotée vers le bas, caractérisé en ce qu'il est prévu un dispositif de verrouillage (42) du clapet (36) en position fermée et en ce que le déverrouillage du clapet (36) est commandé lors de l'introduction du pistolet (28) dans la tête de remplissage (14).

2. Dispositif selon la revendication 1, caractérisé en ce que le clapet (36) est rappelé vers sa position fermée par des moyens de rappel élastique.

3. Dispositif selon la revendication 2, caractérisé en ce que le clapet (36) est rappelé vers sa position fermée par un contrepoids (38) fixé sur le clapet (36).

4. Dispositif selon la revendication 3, caractérisé en ce que le contrepoids (38) est réalisé venu de matière avec le clapet (36).

5. Dispositif selon l'une des revendications 3 ou 4, caractérisé en ce que la paroi latérale du conduit tubulaire (16) comporte un évidement (39) agencé au niveau de l'axe d'articulation (A1) du clapet (36) et en ce qu'en position ouverte du clapet (36), le contrepoids (38) est reçu dans l'évidement (39) pour permettre au clapet (36) de s'escamoter complètement.

6. Dispositif selon la revendication 1, caractérisé en ce que le dispositif de verrouillage comporte un levier (42) articulé, autour d'un axe (A2) transversal par rapport à la tête de remplissage (14), entre une position de déverrouillage et une position de verrouillage vers laquelle il est rappelé élastiquement et dans laquelle un doigt transversal (48), agencé à l'extrémité libre (46) du levier (42) coopère avec une surface de butée (50) du clapet (36) pour verrouiller ce dernier en position fermée.

7. Dispositif selon la revendication 6, caractérisé en ce que le levier (42) comporte un tronçon de commande (52) sur lequel agit le pistolet (28) lors de son introduction dans la tête de remplissage (14) pour déplacer le levier (42) de sa position de verrouillage vers sa position de déverrouillage dans laquelle le tronçon de commande (52) est escamoté vers le bas.

8. Dispositif selon la revendication 7, caractérisé en ce que le levier (42) est articulé par une première extrémité autour d'un axe (A2) parallèle à l'axe d'articulation (A1) du clapet (36) et agencé au-dessus de celui-ci, en ce que le tronçon de commande (52) est formé sensiblement à mi-longueur du levier (42), et en ce que l'extrémité libre (46) du levier (42) porte le doigt transversal (48) qui est destiné à coopérer avec la surface de butée (50) agencée au-dessus et en regard de la paroi d'obturation (40) du clapet (36).

9. Dispositif selon la revendication 8, caractérisé en ce que la paroi d'obturation (40) comporte une cuvette (58) destinée à permettre le passage du doigt transversal (48) du levier (42) lorsque celui-ci passe de sa position de verrouillage à sa position escamotée de déverrouillage sans provoquer l'ouverture du clapet (36).

10. Dispositif selon la revendication 9, caractérisé en ce que la surface de butée (50) s'étend au-dessus de la cuvette (58) du clapet (36) en regard de la trajectoire de l'extrémité (46) du levier (42) par rapport au clapet (36), de sorte qu'en retournant vers sa position de verrouillage, le levier (42) force, le cas échéant, le clapet (36) vers sa position fermée, le doigt transversal (48) du levier (42) glissant le long de la surface de butée (50) du clapet (36).

11. Dispositif selon l'une des revendications 7 à 10, caractérisé en ce que la tête de remplissage (14) comporte un dispositif de détrompage (62) qui est agencé au-dessus du clapet (36) et du tronçon de commande (52) du levier de verrouillage (42) de manière à empêcher qu'un pistolet non conforme au dispositif de détrompage (62) ne puisse provoquer l'ouverture du clapet (36).

12. Dispositif selon l'une quelconque des revendications précédentes, caractérisé en ce qu'il comporte un tube anti-refoulement (30) dont une extrémité inférieure (32) débouche dans le réservoir (12) et dont une extrémité supérieure (34) débouche dans la tête de remplissage (14) en dessous du clapet (36).

## Patentansprüche

1. Füllvorrichtung für einen Kraftfahrzeug-Brennstofftank (12) mit einem Füllkopf (14), dessen rohrförmige Leitung (16) dazu bestimmt ist, eine Brennstoffverteilerpistole (28) aufzunehmen und in Längsrichtung nach unten durch ein in den Tank (12) einmündendes Füllrohr (24) verlängert ist, wobei eine normalerweise geschlossene Klappe (36) in die Füllvorrichtung (10) eingefügt ist und dessen Öffnung durch das Einwirken eines Brennstoffflusses auf die Schließwand (40) der Klappe (36) bei Füllen des Tankes (12) gesteuert wird, wobei die Klappe (36) um eine im wesentlichen zur rohrförmigen Leitung (16) des Füllkopfes (14) tangentiale Querachse (A1) zwischen einer im wesentlichen zur Leitung (16) transversalen Schließlage und einer nach unten führenden Öffnungslage angelenkt ist, dadurch gekennzeichnet, daß für die Schließlage der Klappe (36) eine Verschlußvorrichtung (42) vorgesehen ist und dadurch, daß die Öffnung der Klappe (36) durch die Einführung der Pistole (28) in den Füllkopf (14) gesteuert wird.

2. Vorrichtung nach Anspruch 1, dadurch gekennzeichnet, daß die Klappe (36) in ihre Schließlage durch elastische Rückführmittel zurückgeleitet wird.

3. Vorrichtung nach Anspruch 2, dadurch gekennzeichnet, daß die Klappe (36) in ihre Schließlage durch ein auf der Klappe (36) befestigtes Gegengewicht zurückgeführt wird.

4. Vorrichtung nach Anspruch 3, dadurch gekennzeichnet, daß das Gegengewicht (38) aus einem von der Klappe herrührenden Material ausgeführt ist.

5. Vorrichtung nach einem der Ansprüche 3 oder 4, dadurch gekennzeichnet, daß die Seitenwand der rohrförmigen Leitung (16) eine auf Höhe der Schwenkachse (A1) der Klappe (36) angeordnete Ausnehmung (39) aufweist und dadurch, daß das Gegengewicht (38) in der Ausnehmung (39) aufgenommen wird, um es der Klappe (36) zu ermöglichen, in geöffneter Lage völlig weggeführt zu werden.

6. Vorrichtung nach Anspruch 1, dadurch gekennzeichnet, daß die Schließvorrichtung einen Hebel (42) aufweist, der angelenkt ist um eine in Bezug auf den Füllkopf (14) quer liegende Achse (A2) zwischen einer Öffnungslage und einer Schließlage, in die er elastisch zurückgeführt wird und in der ein am freien Ende (46) des Hebels (42) angebrachter Querfinger (48) mit einer Anschlagsfläche (50) der Klappe (36) zusammenwirkt, um letztere in der Schließlage zu blockieren.

7. Vorrichtung nach Anspruch 6, dadurch gekennzeichnet, daß der Hebel (42) einen Steuerteil (52) aufweist, auf das die Pistole (28) bei ihrer Einführung in den Füllkopf (14) einwirkt, um den Hebel (42) aus seiner Schließlage in seine Öffnungslage, in der das Steuerteil (52) nach unten weggeführt ist, zu bewegen.

8. Vorrichtung nach Anspruch 7, dadurch gekennzeichnet, daß der Hebel (42) durch ein erstes Ende um eine Achse (A2), die parallel zur Gelenkachse (A1) der Klappe (36) verläuft und oberhalb dieser angeordnet ist, angelenkt ist, daß das Steuerteil (52) im wesentlichen auf halber Länge des Hebels (42) ausgeformt ist, und daß das freie Ende (46) des Hebels (42) den Querfinger (48) trägt, welcher dazu bestimmt ist, mit der Anschlagsfläche (50), die oberhalb und gegenüber der Schließwand (40) der Klappe (36) angeordnet ist, zusammenzuwirken.

9. Vorrichtung nach Anspruch 8, dadurch gekennzeichnet, daß die Schließwand (40) eine Ausbuchtung (58) aufweist, welche dazu bestimmt ist, daß der Querfinger (48) des Hebels (42), ohne eine Öffnung der Klappe (36) hervorzurufen, durchgeführt werden kann, wenn dieser aus seiner Schließlage in seine weggeführte Öffnungslage übergeht.

10. Vorrichtung nach Anspruch 9, dadurch gekennzeichnet, daß sich die Anschlagfläche (50) oberhalb der Ausbuchtung (58) der Klappe (36) in Bezug auf sie gegenüber des Weges des Hebelendes (46) erstreckt , und zwar derart, daß der Hebel (42), wenn er in seine Schließlage zurückkehrt, eventuell die Klappe (36) in ihre Schließlage zurück zwingt, wobei der Querfinger (48) des Hebels (42) entlang der Anschlagfläche (50) der Klappe (36) gleitet.

11. Vorrichtung nach einem der Ansprüche 7 bis 10, dadurch gekennzeichnet, daß der Füllkopf (14) eine Sicherheitsvorrichtung (62) enthält , welche oberhalb der Klappe (36) und des Steuerteils (52) des Schließhebels (42) angeordnet ist und zwar derart, daß eine mit der Sicherheitvorrichtung (62) nicht konforme Pistole daran gehindert wird, eine Öffnung der Klappe (36) hervorzurufen.

12. Vorrichtung nach irgendeinem der vorhergehenden Ansprüche, dadurch gekennzeichnet, daß sie ein Gasabführungsrohr (30) aufweist, dessen unteres Ende (32) in den Tank (12) und dessen oberes Ende (34) in den Füllkopf (14) unterhalb der Klappe (36) mündet.

## Claims

1. Filler device for a motor vehicle fuel tank (12), of the type including a filler head (14) a tubular passage (16) of which is intended to receive a fuel distribution gun (28) and is extended longitudinally downwardly by a filler pipe (24) opening into the tank (12), a normally closed valve (36) being interposed in the filler device (10) and the opening of which is controlled by the action of a flow of fuel on a closing wall (40) of the valve (36), when the tank (12) is filled, the valve (36) being mounted hinged about a transversal axis (A1) substantially tangential to the tubular passage (16) of the filler head (14), between a closed position substantially transversal to the passage (16) and a downwardly retracted open position, characterised by the fact that a device (42) is provided for locking the valve (36) in the closed position and by the fact that unlocking of the valve (36) is caused upon introduction of the gun (28) into the filler head (14).

2. Device as described in claim 1, characterised by the fact that the valve (36) is returned towards its closed position by elastic return means.

3. Device as described in claim 2, characterised by the fact that the valve (36) is returned towards its closed position by a counter-weight (38) fixed on the valve (36).

4. Device as described in claim 3, characterised by the fact that the counter-weight (38) is made in one piece with and of the same material as the valve (36).

5. Device as described in one of claims 3 and 4, characterised by the fact that the lateral wall of the tubular passage (16) includes a cavity (39) arranged at the level of the hinge axis (A1) of the valve (36) and by the fact that in the open position of the valve (36) the counter-weight (38) is received in the cavity (39) to allow the valve (36) to be completely retracted.

6. Device as described in claim 1, characterised by the fact that the locking device includes a lever (42), hinged about an axis (A2) transversal relative to the filler head (14), between an unlocking position and a locking position towards which it is elastically returned and in which a transversal finger (48), arranged at the free end (46) of the lever (42), co-operates with a thrust surface (50) of the valve (36) to lock the latter in the closed position.

7. Device as described in claim 6, characterised by the fact that the lever (42) includes a control section (52) on which the gun (28) acts when it is introduced into the filler head (14) to displace the lever (42) from its locking position towards its unlocking position in which the control section (52) is downwardly retracted.

8. Device as described in claim 7, characterised by the fact that the lever (42) is hinged by a first end about an axis (A2) parallel with the hinge axis (A1) of the valve (36) and arranged above the latter, by the fact that the control section (52) is formed substantially at the middle of the length of the lever (42) and by the fact that the free end (46) of the lever (42) carries the transversal finger (48) which is intended to co-operate with the thrust surface (50) arranged above and opposite the closing wall (40) of the valve (36).

9. Device as described in claim 8, characterised by the fact that the closing wall (40) includes a chamber (58) intended to permit passage of the transversal finger (48) of the lever (42) when this passes from its locking position to its retracted unlocking position without causing opening of the valve (36).

10. Device as described in claim 9, characterised by the fact that the thrust surface (50) extends over the chamber (58) of the valve (36) opposite the trajectory of the end (46) of the lever (42) relative to the valve (36), so that as it returns towards its locking position, the lever (42), where necessary, forces the valve (36) towards its closed position, the transversal finger (48) of the lever (42) sliding along the thrust surface (50) of the valve (36).

11. Device as described in one of claims 7 to 10, characterised by the fact that the filler head (14) includes an error-prevention device (62) which is arranged above the valve (36) and the control section (52) of the locking lever (42) so as to prevent a gun not conforming with the fail-safe device (62) from being able to cause the opening of the valve (36).

12. Device as described in any one of the preceding claims, characterised by the fact that it includes an anti-blowback pipe( 30) a lower end (32) of which opens into the tank (12) and an upper end (34) of which opens into the filler head (14) below the valve (36).
